(19) **Europäisches Patentamt**

**European Patent Office**

**Office européen des brevets**

(11) **EP 1 206 678 B1**

(12) **EUROPÄISCHE PATENTSCHRIFT**

(45) Veröffentlichungstag und Bekanntmachung des Hinweises auf die Patenterteilung:
**22.10.2003 Patentblatt 2003/43**

(21) Anmeldenummer: **00964038.4**

(22) Anmeldetag: **25.08.2000**

(51) Int Cl.$^7$: **G01B 13/02**, G01B 13/10

(86) Internationale Anmeldenummer:
**PCT/EP00/08306**

(87) Internationale Veröffentlichungsnummer:
**WO 01/014828 (01.03.2001 Gazette 2001/09)**

(54) **VERFAHREN UND VORRICHTUNG ZUR KOMPENSATION DES ÜBERTRAGUNGSVERHALTENS EINER MESS-, REGEL- ODER STEUERANORDNUNG**

METHOD AND DEVICE FOR COMPENSATING THE TRANSMISSION BEHAVIOUR OF A MEASURING, REGULATING OR CONTROL DEVICE

PROCEDE ET DISPOSITIF DE COMPENSATION DU COMPORTEMENT DE TRANSMISSION D'UN SYSTEME DE MESURE, DE REGULATION OU DE COMMANDE

(84) Benannte Vertragsstaaten:
**AT BE CH CY DE DK ES FI FR GB GR IE IT LI LU MC NL PT SE**

(30) Priorität: **25.08.1999 DE 19940401**

(43) Veröffentlichungstag der Anmeldung:
**22.05.2002 Patentblatt 2002/21**

(73) Patentinhaber: **Stotz-Feinmesstechnik GmbH**
**70839 Gerlingen (DE)**

(72) Erfinder: **STAMENKOVIC, Milan**
**70839 Gerlingen (DE)**

(74) Vertreter: **Manitz, Finsterwald & Partner GbR**
**Martin-Greif-Strasse 1**
**80336 München (DE)**

(56) Entgegenhaltungen:
**DE-A- 2 921 989**     **DE-A- 4 200 401**
**US-A- 5 213 726**

**Beschreibung**

Die vorliegende Erfindung betrifft ein Verfahren zur Kompensation des Übertragungsverhaltens einer Meß-, Regel- oder Steueranordnung, insbesondere einer dynamischen Längenmeßanordnung nach dem Hochdruckmeßverfahren, bei welchem die Ausgangswerte der Anordnung mit einer Korrekturfunktion modifiziert werden, die näherungsweise nach dem Übertragungsverhalten der Anordnung für die zugehörigen Eingangswerte bestimmt wird.

Es ist bekannt, daß Meß-, Regel- und Steueranordnungen ein Übertragungsverhalten aufweisen. Insbesondere hinkt aufgrund der Trägheit der genannten Anordnungen der Ausgangswert dem Eingangswert hinterher. Das heißt, der Ausgangswert erreicht erst nach einer bestimmten Anlaufzeit den Wert des Eingangswertes. Dies führt dazu, daß schnelle dynamische Messungen nicht durchführbar sind.

Es ist daher bekannt, das Übertragungsverhalten derartiger Anordnungen zu kompensieren, indem eine zu der Übertragungsfunktion inverse Funktion auf den Ausgangswert angewendet wird. In üblicher Weise wird hierfür die Übertragungsfunktion näherungsweise als Differentialgleichung beschrieben, deren Ordnung von der jeweiligen Anordnung abhängt. Problema sch ist, daß Differentialgleichungen höherer Ordnung schaltungstechnisch nicht oder nur sehr aufwendig zu realisieren sind. Entsprechend kompliziert ist die Kompensation des Übertragungsverhaltens einer solchen Anordnung.

Der Erfindung liegt die Aufgabe zugrunde, ein verbessertes Verfahren der eingangs genannten Art sowie eine Vorrichtung zur Durchführung des Verfahrens anzugeben. Insbesondere soll die Kompensation einfacher realisierbar sein.

Diese Aufgabe wird dadurch gelöst, daß als genäherte Korrekturfunktion eine lineare Differentialgleichung erster Ordnung verwendet wird und daß die Ausgangswerte mehrmals nacheinander mit dieser Korrekturfunktion modifiziert werden, indem der modifizierte Ausgangswert erneut modifiziert wird und so fort.

Der Erfindungsgedanke besteht also darin, unabhängig von der Art der Anordnung und ihrem Übertragungsverhalten stets nur Differentialgleichungen erster Ordnung zur Kompensation des Übertragungsverhaltens zu verwenden und diese Kompensation in Art eines Iterationsverfahrens so oft durchzuführen, daß ein gewünschter Kompensationsgrad oder eine gewünschte Beschleunigung der Messung, also Zeit bis zum Erreichen des Endwertes erreicht wird. Beispielsweise wird eine Differentialgleichung vierter Ordnung eines herkömmlichen Verfahrens durch viermalige Anwendung einer Differentialgleichung erster Ordnung auf die Ausgangswerte ersetzt, um denselben Kompensationsgrad zu erreichen. Damit ist die inverse Übertragungsfunktion schaltungstechnisch leicht realisierbar. Da zudem eine wiederholte Anwendung dieser Schaltung unproblematisch ist, ist die Kompensation insgesamt unaufwendig.

Nach einer Ausgestaltung der Erfindung weist die Korrekturfunktion die folgende Form auf:

$$S'(t) = S(t) + k \times \frac{dS(t)}{dt} ,$$

wobei S(t) der zu modifizierende Wert, S'(t) der modifizierte Wert und k eine Konstante ist. Dabei wird bevorzugt für jeden Korrekturschritt eine eigene Konstante k festgelegt. Mit dieser Funktion und der Festlegung unabhängiger Konstanten k für jeden Korrekturschritt kann eine sehr gute und schnelle Anpassung des Ausgangswertes an den Eingangswert erreicht werden.

Bevorzugt ist es, wenn die Konstanten k so bestimmt werden, daß für die gewünschte Korrektur möglichst wenig Korrekturschritte benötigt werden. Dadurch wird die Kompensationsschaltung vereinfacht und das Verfahren beschleunigt.

Nach einer weiteren Ausgestaltung der Erfindung werden geeignete Konstanten k für die Korrekturschritte durch Versuche bestimmt. Es hat sich gezeigt, daß auf diese Weise sehr gute Ergebnisse erzielt werden können.

Nach einer weiteren Ausgestaltung der Erfindung werden die Konstanten k für die Korrekturschritte automatisch bestimmt. Das heißt, durch eine festzulegende Routine werden die Konstanten k solange variiert, bis sie ein optimales Ergebnis liefern.

Nach einer weiteren Ausgestaltung der Erfindung werden im letzten Korrekturschritt die modifizierten Werte durch ein Dämpfungsglied, insbesondere einen Tiefpaß geleitet. Hierdurch wird ein Überschwingen des korrigierten Wertes über den tatsächlichen Wert vermieden.

Nach einer weiteren Ausgestaltung der Erfindung wird der Endwert der Korrektur über eine Zeitspanne gemittelt. Ein durch die Dämpfung oder aus anderem Grunde auftretendes Rauschen kann dadurch ausgeglichen werden.

Bevorzugt ist es, wenn die Mittelung des Endwertes nach einer festlegbaren Vorlaufzeit begonnen wird. Damit kann sichergestellt werden, daß sich der Endwert bereits ausreichend stabilisiert hat.

Nach einer weiteren Ausgestaltung der Erfindung wird die Mittelung auf ein von außen dem System zuführbares Startsignal begonnen. Dadurch wird die Möglichkeit geschaffen, die Mittelung individuell und insbesondere abhängig von äußeren Parametern zu beginnen.

Eine Vorrichtung zur Durchführung des Verfahrens nach Anspruch 1 weist die in Anspruch 11 angegebenen Merkmale auf, außerdem gegebenenfalls Mittel zur Dämpfung des modifizierten Wertes, insbesondere einen Tiefpaß, und Mittel zur Mittelung des Endwertes der Modifikation sowie Mittel zur Ausgabe des korrigierten Wertes. Bevorzugt ist die Vorrichtung so ausgebildet, daß die Zahl der Korrekturschritte einstellbar ist. Damit kann die Genauigkeit und die Beschleunigung des Korrekturverfahrens gewählt werden.

Nach einer weiteren Ausgestaltung der Erfindung ist der Zeitpunkt der Mittelung einstellbar. Nach noch einer Ausgestaltung der Erfindung ist der Dämpfungsgrad, insbesondere der Grenzwert des Tiefpasses einstellbar.

Bevorzugt verwendet wird das erfindungsgemäße Verfahren und die erfindungsgemäße Vorrichtung bei Längenmessungen nach dem Hochdruckmeßverfahren, die mit einer Meßdüse und einer Vordüse sowie mit einem Drucksensor vor der Vordüse und einem Drucksensor zwischen Vordüse und Meßdüse, also ohne die sonst übliche Brückenschaltung arbeiten. Bei einem derartigen, beispielsweise aus der DE 197 33 984 A1 bekannten Verfahren und Vorrichtung tritt oftmals das Problem auf, daß die Drucksensoren relativ weit von der Meßdüse entfernt sind, da in der Nähe der Meßdüse kein ausreichender Platz hierfür vorhanden ist. Die Ansprechzeit der Meßanordnung ist daher entsprechend lang.

Durch das erfindungsgemäße Verfahren und die erfindungsgemäße Vorrichtung kann die Ansprechzeit in einfacher und geschickter Weise kompensiert werden, so daß derartige Messungen mit verhältnismäßig geringem Aufwand beschleunigt werden können. Damit werden schnelle dynamische Längenmessungen möglich.

Ein Ausführungsbeispiel der Erfindung ist in der Zeichnung dargestellt und wird nachfolgend beschrieben. Es zeigen, jeweils in schematischer Darstellung,

Fig. 1    das Grundprinzip einer pneumatischen Längenmessung ohne Brückenschaltung,

Fig. 2    der Einsatz einer solchen Meßanordnung mit erfindungsgemäßer Kompensationsvorrichtung, und

Fig. 3    eine Gegenüberstellung der kompensierten und der nicht kompensierten Meßwerte einer solchen Anordnung.

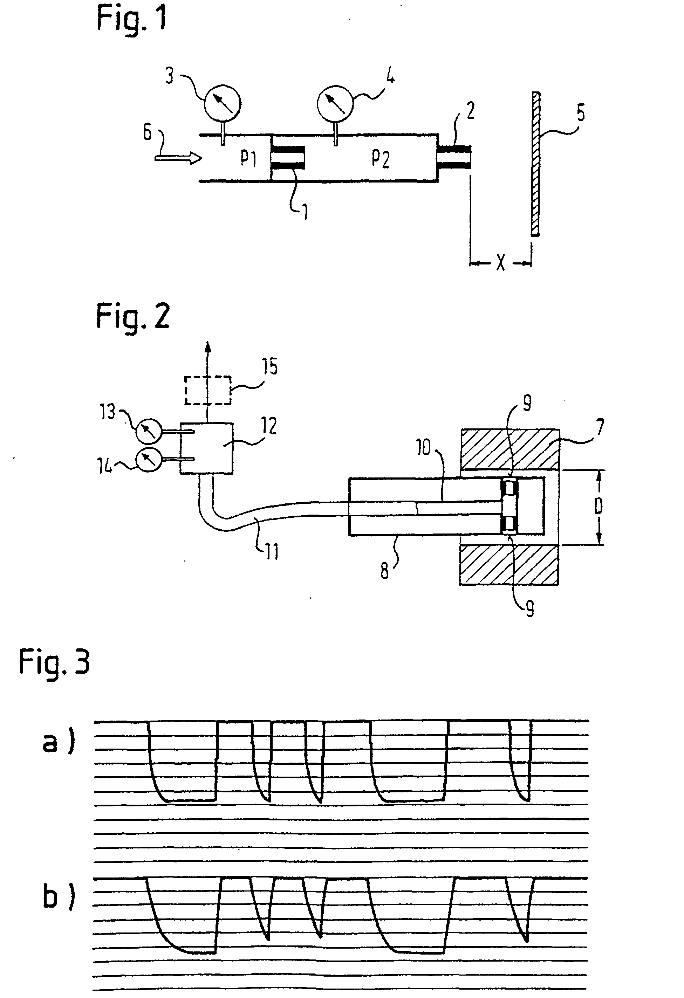

Fig. 1 zeigt den prinzipiellen Aufbau einer Meßanordnung zur Durchführung einer pneumatischen Längenmessung, wie sie beispielsweise in der DE 197 33 984 A1 beschrieben ist. Die dargestellte Meßanordnung umfaßt eine Vordüse 1, eine Meßdüse 2, einen vor der Vordüse 1 angeordneten ersten Drucksensor 3 und einen zwischen Vordüse 1 und Meßdüse 2 angeordneten zweiten Drucksensor 4. Vor der Luftaustrittsöffnung der Meßdüse 2 ist eine Prallplatte 5 stellvertretend für ein zu messendes Werkstück gezeigt.

Von einer nicht dargestellten Druckquelle wird dem System gemäß Pfeil 6 Druckluft zugeführt. Bei Änderung des Abstandes X zwischen Prallplatte 5 und Meßdüse 2 ändert sich der vom Drucksensor 4 gemessene Druckwert $p_2$. Unter Berücksichtigung des vom ersten Drucksensor 3 gemessenen Druckwertes $p_1$ wird hieraus der Abstand X bestimmt.

Fig. 2 zeigt die Anwendung des unter Bezugnahme auf Fig. 1 beschriebenen Prinzips zur Messung des Innendurchmessers D eines hohlen Gegenstandes 7. Ein Meßkopf 8 umfaßt zwei auf gegenüberliegenden Seiten liegende Luftaustrittsöffnungen 9, die über einen Druckkanal 10 mit einer an den Meßkopf 8 angeschlossenen Druckleitung 11 verbunden sind. Die Druckleitung 11 ist anderenends mit einem Transducer 12 verbunden, in welchem die Vordüse und die beiden Drucksensoren 13 und 14 untergebracht sind, und der an eine Druckquelle angeschlossen ist. Der Signalausgang des Transducers 12 ist mit einer erfindungsgemäßen Kompensationsvorrichtung 15 verbunden, deren Ausgang wiederum das Endsignal zur Verfügung stellt. Eine Erhöhung des Durchmessers D führt zu einem Abfall des gemessenen Druckes $p_2$ und umgekehrt.

Die Kompensationsvorrichtung umfaßt insbesondere eine Schaltung, mit welcher die Kompensationsfunktion, bei der es sich erfindungsgemäß um eine Differentialgleichung erster Ordnung handelt, realisiert ist, sowie Mittel, um die Kompensationsfunktion mehrfach auf ein vom Transducer 12 geliefertes Ausgangssignal anzuwenden. Das heißt, auf das vom Transducer 12 gelieferte Signal wird die in der Schaltung festgelegte Differentialgleichung angewendet und auf das sich daraus ergebende Signal erneut diese Differentialgleichung und so fort, bis eine gewünschte Beschleunigung erreicht oder eine vorher festgelegte Anzahl von derartigen Korrekturschritten absolviert wurde.

Die in der Schaltung festgelegte Korrekturfunktion kann beispielsweise folgende Form aufweisen:

$$S'(t) = S(t) + k \times \frac{dS(t)}{dt} \, ,$$

wobei S(t) der zu modifizierende Wert, S'(t) der modifizierte Wert und k eine Konstante ist. Für jeden Korrekturschritt ist dabei bevorzugt eine eigene Konstante k festgelegt, wobei diese Konstanten k für die jeweilige Anordnung entweder durch Versuche oder automatisch bestimmt werden können. Bevorzugt werden die Konstanten k dabei so bestimmt, daß nur wenige Korrekturschritte benötigt werden. Bei einem Hochdruckmeßverfahren der zuvor beschriebenen Art konnten mit vier Korrekturschritten und geeigneten Konstanten k gute Beschleunigungswerte erzielt werden.

Fig. 3 zeigt eine mit der Vorrichtung von Fig. 2 durchgeführte Messung des Innendurchmessers D des Gegenstandes 7. Hierfür wurde der Meßkopf 8 fünfmal mit unterschiedlicher Geschwindigkeit in den Gegenstand 7 ein- und wieder ausgeführt. Die Schlauchlänge betrug bei Durchführung der Messung 1,5 m. Der Transducer wurde vor der Messung für den Nenndurchmesser D statisch auf Null justiert.

Fig. 3a zeigt das Meßergebnis unter Verwendung der erfindungsgemäßen Kompensationsvorrichtung und Fig. 3b ohne Kompensation. Es ist klar erkennbar, daß der Meßwert mit der erfindungsgemäßen Kompensation deutlich schneller erreicht wird als ohne. Außerdem ist erkennbar, daß bei sehr kurzen Messungen mit erfindungsgemäßer Kompensation der Meßwert noch erreicht wird, während dies ohne Kompensation nicht mehr der Fall ist.

Durch das erfindungsgemäße Verfahren und die erfindungsgemäße Vorrichtung wird also, wie dargestellt und ausgeführt, eine deutliche Beschleunigung der Messung erreicht. Damit können schnelle dynamische Messungen durchgeführt werden. Aufgrund des erfindungsgemäßen Kompensationsverfahrens ist die Kompensation unkompliziert und kann mit verhältnismäßig einfachen Schaltungen realisiert werden.

**Bezugszeichenliste**

1    Vordüse
2    Meßdüse
3    erster Drucksensor
4    zweiter Drucksensor
5    Prallplatte
6    Pfeil
7    Gegenstand
8    Meßkopf
9    Luftaustrittsöffnung
10   Luftkanal
11   Luftleitung
12   Transducer
13   erster Drucksensor
14   zweiter Drucksensor
15   Kompensationsvorrichtung
X    Abstand
D    Durchmesser

**Patentansprüche**

1.  Verfahren zur Kompensation des Übertragungsverhaltens einer Meß-, Regel- oder Steueranordnung, insbesondere einer dynamischen Längenmeßanordnung nach dem Hochdruckmeßverfahren, bei welchem die Ausgangswerte der Anordnung mit einer Korrekturfunktion modifiziert werden, die näherungsweise nach dem Übertragungsverhalten der Anordnung für die zugehörigen Eingangswerte bestimmt wird,
**dadurch gekennzeichnet, daß** als genäherte Korrekturfunktion eine lineare Differentialgleichung erster Ordnung verwendet wird und daß die Ausgangswerte mehrmals nacheinander mit dieser Korrekturfunktion modifiziert werden, indem der modifizierte Ausgangswert erneut modifiziert wird und so fort.

2.  Verfahren nach Anspruch 1,
**dadurch gekennzeichnet, daß** die wiederholt angewendete Korrekturfunktion folgende Form aufweist:

$$S'(t) = S(t) + k \times \frac{dS(t)}{dt},$$

wobei S(t) der zu modifizierende Wert, S'(t) der modifizierte Wert und k eine Konstante ist.

3.  Verfahren nach Anspruch 2,
**dadurch gekennzeichnet, daß** für jeden Korrekturschritt eine eigene Konstante k festgelegt wird.

4.  Verfahren nach Anspruch 3,
**dadurch gekennzeichnet, daß** die Konstanten k so bestimmt werden, daß für die gewünschte Korrektur möglichst wenig Korrekturschritte benötigt werden.

5.  Verfahren nach Anspruch 3 oder 4,
**dadurch gekennzeichnet, daß** geeignete Konstanten k für die Korrekturschritte durch Versuche bestimmt werden.

6.  Verfahren nach Anspruch 3 oder 4,
**dadurch gekennzeichnet, daß** geeignete Konstanten k für die Korrekturschritte automatisch bestimmt werden.

7.  Verfahren nach einem der vorhergehenden Ansprüche,
**dadurch gekennzeichnet, daß** im letzten Korrekturschritt die modifizierten Werte durch ein Dämpfungsglied, insbesondere einen Tiefpaß, geleitet werden.

8.  Verfahren nach Anspruch 7,
**dadurch gekennzeichnet, daß** der Endwert der Korrektur über eine Zeitspanne gemittelt wird.

9.  Verfahren nach Anspruch 8,
**dadurch gekennzeichnet, daß** die Mittelung des Endwertes nach einer festlegbaren Vorlaufzeit begonnen wird.

10. Verfahren nach Anspruch 9,
**dadurch gekennzeichnet, daß** die Mittelung auf ein von außen dem System zuführbares Startsignal begonnen wird.

11. Vorrichtung zur Kompensation des Übertragungsverhaltens einer Meß-, Regel- oder Steueranordnung, insbesondere einer dynamischen Längenmeßanordnung nach dem Hochdruckmeßverfahren, mit Mitteln zum Modifizieren der Ausgangswerte der Anordnung mit einer Korrekturfunktion, die näherungsweise nach dem Übertragungsverhalten der Anordnung für die zugehörigen Eingangswerte bestimmt wird, **dadurch gekennzeichnet,** **daß** die Mittel zum Modifizieren so ausgestaltet sind, daß als genäherte Korrekturfunktion eine lineare Differentialgleichung erster Ordnung verwendet wird und die Ausgangswerte mehrmals nacheinander mit dieser Korrekturfunktion modifiziert werden, indem der modifizierte Ausgangswert erneut modifiziert wird und so fort.

12. Vorrichtung nach Anspruch 11, **dadurch gekennzeichnet,** **daß** ein Dämpfungsglied, insbesondere ein Tiefpaß vorgesehen ist, durch welches die modifizierten Werte leitbar sind.

13. Vorrichtung nach Anspruch 11 oder 12, **dadurch gekennzeichnet,** **daß** Mittel zur Mittelung des modifizieren Wertes vorgesehen sind.

14. Vorrichtung nach einem der Ansprüche 11 bis 13, **dadurch gekennzeichnet,** **daß** Mittel zur Ausgabe des Endwertes vorgesehen sind.

15. Vorrichtung nach einem der Ansprüche 11 bis 14, **dadurch gekennzeichnet,** **daß** die Zahl der Korrekturschritte einstellbar ist,

16. Vorrichtung nach einem der Ansprüche 11 bis 15, **dadurch gekennzeichnet,** **daß** der Startzeitpunkt der Mittelung einstellbar ist.

17. Vorrichtung nach einem der Ansprüche 11 bis 16, **dadurch gekennzeichnet,** **daß** die Größe der Dämpfung, insbesondere der Grenzwert des Tiefpasses, vorgebbar ist.

18. Verwendung des Verfahrens nach einem der Ansprüche 1 bis 10 zur Längenmessung nach dem Hochdruckmeßverfahren, insbesondere unter Verwendung einer Vorrichtung mit Vordüse (1) und Meßdüse (2), einem ersten Drucksensor (3) vor der Vordüse (1) und einem zweiten Drucksensor (4) zwischen Vordüse (1) und Meßdüse (2).

19. Verwendung einer Vorrichtung nach einem der Ansprüche 11 bis 17 zur Längenmessung nach dem Hochdruckmeßverfahren, insbesondere unter Verwendung einer Vorrichtung mit einer Vordüse (1), einer Meßdüse (2), einem ersten Drucksensor (3) vor der Vordüse (1) und einem zweiten Drucksensor (4) zwischen Vordüse (1) und Meßdüse (2).

**Claims**

1. A method for compensating the transmission behavior of a measuring, regulating or control arrangement, in particular of a dynamic length measuring arrangement in accordance with a high pressure measurement method, in which the output values of the arrangement are modified by a correction function which is approximately determined in accordance with the transmission behavior of the arrangement for the associated input values, **characterized in that** a linear differential equation of the first order is used as the approximated correction function; and **in that** the output values are modified by this correction function a plurality of times in succession **in that** the modified output value is again modified, and so on.

2. A method in accordance with claim 1, **characterized in that** the repeatedly applied correction function has the following form:

$$S'(t) = S(t) + k \times \frac{dS(t)}{dt},$$

where S(t) is the value to be modified, S'(t) is the modified value and k is a constant.

3. A method in accordance with claim 2, **characterized in that** a separate constant k is fixed for each correction step.

4. A method in accordance with claim 3, **characterized in that** the constants k are determined such that as few corrections steps as possible are needed for the desired correction.

5. A method in accordance with claim 3 or claim 4, **characterized in that** suitable constants k for the correction steps are determined by trials.

6. A method in accordance with claim 3 or claim 4, **characterized in that** suitable constants k for the correction steps are determined automatically.

7. A method in accordance with any one of the preceding claims, **characterized in that** the modified values are directed through an attenuation member, in particular a low pass filter, in the last correction step.

8. A method in accordance with claim 7, **characterized in that** the end value of the correction is averaged over a time interval.

9. A method in accordance with claim 8, **characterized in that** the averaging of the end value is started after a fixable start-up time.

**10.** A method in accordance with claim 9, **characterized in that** the averaging is started in response to a start signal deliverable to the system from the outside.

**11.** An apparatus for compensating the transmission behavior of a measuring, regulating or control arrangement, in particular of a dynamic length measuring arrangement in accordance with a high pressure measurement method, having means for modifying the output values of the arrangement by a correction function which is approximately determined in accordance with the transmission behavior of the arrangement for the associated input values, **characterized in that** the means for modifying are designed such that a linear differential equation of the first order is used as the approximated correction function and the output values are modified by this correction function a plurality of times in succession **in that** the modified output value is again modified, and so on.

**12.** An apparatus in accordance with claim 11, **characterized in that** an attenuation member, in particular a low pass filter is provided, through which the modified values can be directed.

**13.** An apparatus in accordance with claim 11 or claim 12, **characterized in that** means are provided for averaging the modified value.

**14.** An apparatus in accordance with any one of claims 11 to 13, **characterized in that** means for outputting the end value are provided.

**15.** An apparatus in accordance with any one of claims 11 to 14, **characterized in that** the number of the correction steps is adjustable.

**16.** An apparatus in accordance with any one of claims 11 to 15, **characterized in that** the starting point in time of the averaging is adjustable.

**17.** An apparatus in accordance with any one of claims 11 to 16, **characterized in that** the magnitude of the attenuation, in particular the limit value of the low pass filter, is pre-settable.

**18.** Use of the method in accordance with any one of claims 1 to 10 for the length measurement in accordance with the high pressure measurement method, in particular while using an apparatus having a front nozzle (1) and a measuring nozzle (2), having a first pressure sensor (3) in front of the front nozzle (1) and having a second pressure sensor (4) between the front nozzle (1) and the measuring nozzle (2).

**19.** Use of a method in accordance with any one of claims 11 to 17 for the length measurement in accordance with the high pressure measurement method, in particular while using an apparatus having a front nozzle (1) a measuring nozzle (2), a first pressure sensor (3) in front of the front nozzle (1) and a second pressure sensor (4) between the front nozzle (1) and the measuring nozzle (2).

**Revendications**

**1.** Procédé pour compenser le comportement de transmission d'un système de mesure, de régulation ou de commande, en particulier d'un dispositif dynamique de mesure de longueur selon le procédé de mesure à haute pression, avec lequel les valeurs de sortie du dispositif sont modifiées avec une fonction de correction qui est déterminée par approximation selon le comportement de transmission du dispositif pour les valeurs d'entrée concernées, **caractérisé en ce qu'**on utilise une équation différentielle linéaire comme fonction de correction approchée et les valeurs de sorties sont modifiées plusieurs fois de façon successive avec cette fonction de correction en modifiant à nouveau la valeur de sortie modifiée et ainsi de suite.

**2.** Procédé selon la revendication 1, **caractérisé en ce que** la fonction de correction utilisée à plusieurs reprises présente la forme suivante :

$$S'(t) = S(t) + k \times dS(t)/dt$$

S(t) étant la valeur à modifier, S'(t) la valeur modifiée et k une constante.

**3.** Procédé selon la revendication 2, **caractérisé en ce qu'**une constante k propre est définie pour chaque étape de correction.

**4.** Procédé selon la revendication 3, **caractérisé en ce que** les constantes k sont définies de telle sorte qu'on a besoin d'un nombre le plus réduit possible d'étapes de correction pour la correction souhaitée.

**5.** Procédé selon la revendication 3 ou 4, **caractérisé en ce que** des constantes k appropriées sont définies par des essais pour les étapes de correction.

**6.** Procédé selon la revendication 3 ou 4, **caractérisé en ce que** des constantes k appropriées sont définies automatiquement pour les étapes de correction.

**7.** Procédé selon l'une quelconque des revendications précédentes,

**caractérisé en ce que** les valeurs modifiées sont guidées par un élément d'atténuation, en particulier un filtre passe-bas, au cours de la dernière étape de correction.

**8.** Procédé selon la revendication 7,

**caractérisé en ce que** la valeur finale de la correction est calculée par rapport à un laps de temps.

**9.** Procédé selon la revendication 8,

**caractérisé en ce que** le calcul de la moyenne de la valeur finale est commencé après un temps préliminaire définissable.

**10.** Procédé selon la revendication 9,

**caractérisé en ce que** le calcul de la moyenne est commencé sur un signal de démarrage qui peut être amené au système de l'extérieur.

**11.** Dispositif pour compenser le comportement de transmission d'un dispositif de mesure, de régulation ou commande, en particulier d'un dispositif dynamique de mesure de longueur selon le procédé de mesure à haute pression, avec des moyens pour modifier la valeur de sortie du dispositif avec une fonction de correction, qui est déterminée par approximation selon le comportement de transmission du dispositif pour les valeurs d'entrée spécifiques,

**caractérisé en ce que**

les moyens pour la modification sont conçus de telle sorte qu'on utilise une équation différentielle linéaire du premier ordre comme fonction de correction approchée et les valeurs de sortie sont modifiées plusieurs fois de façon successive avec cette fonction de correction en modifiant à nouveau la valeur de sortie modifiée et ainsi de suite.

**12.** Dispositif selon la revendication 11,

**caractérisé en ce qu'**

un élément d'atténuation, en particulier un filtre passe-bas est prévu, par lequel les valeurs modifiées peuvent être guidées.

**13.** Dispositif selon la revendication 11 ou 12,

**caractérisé en ce que**

des moyens sont prévus pour le calcul de la moyenne de la valeur modifiée.

**14.** Dispositif selon l'une quelconque des revendications 11 à 13,

**caractérisé en ce que**

des moyens sont prévus pour la sortie de la valeur finale.

**15.** Dispositif selon l'une quelconque des revendications 11 à 14,

**caractérisé en ce que** le nombre des étapes de correction est réglable.

**16.** Dispositif selon l'une quelconque des revendications 11 à 15,

**caractérisé en ce que**

l'instant de démarrage du calcul de la moyenne est réglable.

**17.** Dispositif selon l'une quelconque des revendications 11 à 16,

**caractérisé en ce que**

la grandeur de l'atténuation, en particulier la valeur limite du filtre passe-bas, est prédéfinissable.

**18.** Utilisation du procédé selon l'une quelconque des revendications 1 à 10 pour la mesure de longueur selon le procédé de mesure à haute pression, en particulier par l'utilisation d'un dispositif muni d'une buse préliminaire (1), et d'une buse de mesure (2), d'un premier capteur de pression (3) avant la buse préliminaire (1) et d'un deuxième capteur de pression (4) entre la buse préliminaire (1) et la buse de mesure (2).

**19.** Utilisation du procédé selon l'une quelconque des revendications 11 à 17 pour la mesure de longueur selon le procédé de mesure à haute pression, en particulier par l'utilisation d'un dispositif muni d'une buse préliminaire (1), d'une buse de mesure (2), d'un premier capteur de pression (3) avant la buse préliminaire (1) et d'un deuxième capteur de pression (4) entre la buse préliminaire (1) et la buse de mesure (2).

**Fig. 1**

**Fig. 2**

**Fig. 3**